# FASCICULE DE BREVET EUROPEEN

(11) **EP 3 319 085 B1**
(45) Date de publication et mention de la délivrance du brevet: **13.04.2022**
(21) Numéro de dépôt: 17199379.3
(22) Date de dépôt: 31.10.2017
(51) Int. Cl.: G10L 17/16, G10L 17/24, G07C 9/37

(54) **PROCÉDÉ ET SYSTÈME D'AUTHENTIFICATION PAR BIOMÉTRIE VOCALE D'UN UTILISATEUR**
AUTHENTIFIZIERUNGSVERFAHREN UND -SYSTEM ÜBER DIE STIMMBIOMETRIE EINES BENUTZERS
METHOD AND SYSTEM FOR USER AUTHENTICATION BY VOICE BIOMETRICS

(30) Priorité: 07.11.2016 FR 1660734
(43) Date de publication de la demande: 09.05.2018
(73) Titulaire: PW Group, 75008 Paris (FR)
(72) Inventeur: LIBERT, Grégory, 75011 PARIS (FR); PETROVSKI CHOLLET, Dijana, 91100 Corbeil Essonnes (FR); KHEMIRI, Houssemeddine, 91130 RIS ORANGIS (FR)
(74) Mandataire: Lavoix

(56) Documents cités:
- EP-A2- 2 784 710
- WO-A1-2006/027844
- US-A- 5 293 452
- US-A1- 2015 371 639
- US-B1- 7 386 448
- QI LI ET AL: "Recent advancements in automatic speaker authentication", IEEE ROBOTICS & AUTOMATION MAGAZINE., vol. 6, no. 1, 1 mars 1999 (1999-03-01), pages 24-34, XP055390647, US ISSN: 1070-9932, DOI: 10.1109/100.755812
- MANAS A PATHAK ET AL: "Privacy-preserving speaker verification as password matching", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25 mars 2012 (2012-03-25), pages 1849-1852, XP032227502, DOI: 10.1109/ICASSP.2012.6288262 ISBN: 978-1-4673-0045-2
- O'GORMAN L: "Comparing passwords, tokens, and biometrics for user authentication", PROCEEDINGS OF THE IEEE, IEEE. NEW YORK, US, vol. 91, no. 12, 1 décembre 2003 (2003-12-01), pages 2021-2040, XP011103638, ISSN: 0018-9219, DOI: 10.1109/JPROC.2003.819611

## Description

La présente invention concerne un procédé et un système d'authentification par biométrie vocale d'un utilisateur.

La reconnaissance d'un locuteur par une méthode de biométrie vocale, est un procédé qui commence à être utilisé dans différentes applications.

Le document QI LI ET AL : « Recent advancements in automatic speaker authentification », IEEE ROBOTICS & AUTOMATION MAGAZINE, vol. 6, no. 1, 1 mars 1999 décrit un procédé d'authentification d'utilisateurs. Le document US 2003/200087 A1 décrit un autre procédé d'authentification d'utilisateurs.

D'une façon générale, ce type de procédés peut par exemple trouver des applications dans les systèmes de contrôle d'accès, par exemple à des locaux, ou à d'autres destinations comme par exemple l'accès à des services bancaires, administratifs, etc.

On conçoit alors que ces procédés et ces systèmes d'authentification doivent être les plus fiables possibles pour contrer les problèmes comme par exemple d'impostures ou d'attaques de faon générale.

On sait en effet que ces impostures ou ces attaques peuvent être de natures différentes, comme par exemple le rejeu, la transformation de la voix ou encore la synthèse de celle-ci.

Le rejeu est une forme d'usurpation d'identité, par laquelle un imposteur attaque un système de vérification du locuteur, en rejouant une séquence de paroles du locuteur cible qu'il a auparavant préenregistrée.

On peut distinguer par exemple deux types de rejeux, à savoir les rejeux non techniques ou rejeux microphone ou les rejeux techniques également appelés rejeux transmission ou traitement.

Le rejeu non technique ou rejeu microphone est un rejeu qui ne nécessite pas de connaissances techniques particulières.

Son point de réalisation se situe au niveau du microphone du système.

Cette attaque consiste à rejouer devant le microphone, un fichier audio du locuteur cible qui a été préenregistré auparavant, avec un dispositif de type smartphone ou enregistreur, ordinateur, etc...

Le rejeu technique ou rejeu transmission ou traitement nécessite quant à lui des compétences techniques particulières.

Son point de réalisation se situe au niveau de la transmission ou du traitement du signal audio.

Dans ce type d'attaques, on suppose que l'imposteur a pu avoir accès au canal de transmission ou de traitement de façon générale, des fichiers audio ou parole, par exemple par piratage, et qu'il injecte directement dans le système, le fichier audio préenregistré du locuteur cible.

La différence entre ces deux types de rejeux est que dans le rejeu non technique, la réponse impulsionnelle des haut-parleurs du dispositif de rejeu, ainsi que la pièce où l'attaque a été réalisée, s'ajoute au signal audio préenregistré par l'imposteur.

Le but de l'invention est de proposer des améliorations à ce type de procédés et de systèmes d'authentification, pour en améliorer encore leur fiabilité et leur résistance aux attaques.

A cet effet l'invention a pour objet un procédé d'authentification par biométrie vocale d'un utilisateur tel que défini dans la revendication 1.

Selon un autre aspect, l'invention a également pour objet un système d'authentification par biométrie vocale d'un utilisateur tel que défini dans la revendication 5.

L'invention sera mieux comprise à la lecture de la description qui va suivre, donnée uniquement à titre d'exemple et faite en se référant aux dessins annexés, sur lesquels :
- la figure 1 représente un schéma synoptique illustrant une partie d'un système d'authentification illustrant les zones de rejeux non techniques et techniques, et
- la figure 2 illustre un schéma synoptique d'un exemple de réalisation d'un procédé d'authentification selon l'invention.

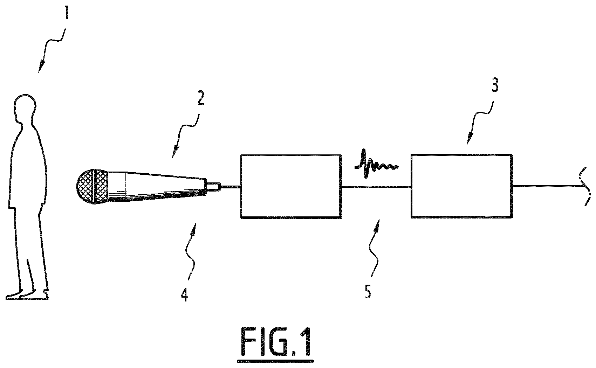

On a en effet illustré sur ces figures et en particulier sur la figure 1, une partie d'un système d'authentification par biométrie vocale d'un utilisateur.

Dans cette figure 1, l'utilisateur du système d'authentification est désigné par la référence générale 1.

Cet utilisateur dispose d'un système à microphone, désigné par la référence générale 2, relié à des moyens d'extraction de caractéristiques vocales, désignés par la référence générale 3.

Le reste de la chaîne de traitement n'est pas illustré, dans la mesure où cette figure 1 n'est donnée que pour définir ce qui, dans la présente demande, constitue un rejeu non technique et un rejeu technique et où peuvent être réalisées les attaques correspondantes.

En fait et comme cela a été décrit précédemment, un rejeu non technique ou rejeu microphone est un rejeu qui ne nécessite pas de connaissances techniques particulières et son point de réalisation se situe au niveau du système à microphone 2.

Ce rejeu consiste en une attaque au cours de laquelle on rejoue devant le microphone, un fichier audio du locuteur cible, qui a été enregistré auparavant, avec un dispositif de type smartphone, tablette, etc...

Le rejeu non technique est donc un rejeu qui se situe au niveau de la zone désignée par la référence générale 4 sur cette figure 1.

Le rejeu technique ou rejeu transmission ou de traitement est quant à lui, un rejeu qui nécessite des compétences techniques et est mis en œuvre au niveau de la transmission ou du traitement du signal, c'est-à-dire à partir de la zone désignée par la référence générale 5 sur cette figure 1.

Dans cette attaque, on suppose que l'imposteur a pu avoir accès au canal de transmission ou de traitement des fichiers audio, par piratage par exemple, et qu'il injecte directement le fichier audio préenregistré du locuteur cible, dans la chaîne de transmission ou de traitement.

Comme cela a été indiqué précédemment également, l'invention se propose d'améliorer les procédés et les systèmes de ce type, pour améliorer leur résistance à ce type d'attaques.

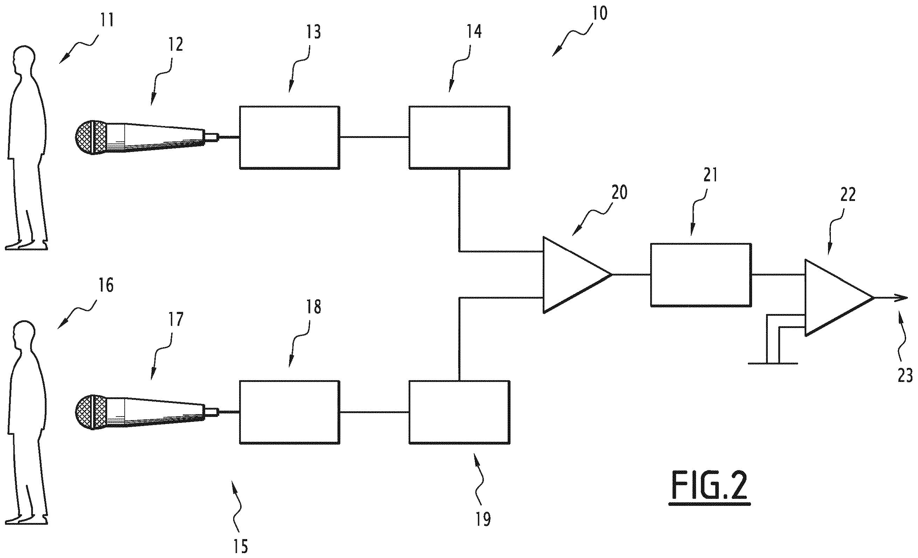

On a illustré sur la figure 2, un procédé d'authentification par biométrie vocale d'un utilisateur, selon l'invention.

Ce procédé comporte une phase préalable de référencement d'un utilisateur autorisé.

Cette phase est désignée par la référence générale 10 sur cette figure.

Au cours de cette phase, un utilisateur désigné par la référence générale 11 sur cette figure, prononce au moins une fois, une phrase de référence.

Ceci est réalisé par exemple à travers un système à microphone, désigné par la référence générale 12.

Cette phrase de référence prononcée lors de cette phase préalable de référencement de l'utilisateur, est ensuite transformée en une suite de symboles de référence, par une transformation statistique commune à tous les utilisateurs à référencer dans le système.

Cette transformation statistique peut par exemple être une transformation dont l'apprentissage est fait de manière non supervisée.

A titre d'exemple, cette transformation statistique utilise des modèles de Markov cachés.

Cette opération de transformation est également appelée Méthode MMC et est désignée par la référence générale 13 sur cette figure 2.

Cette transformation permet d'obtenir une suite de caractères désignés par exemple par la référence générale 14 sur cette figure.

Tous les utilisateurs à référencer passent alors par cette phase préalable de référencement, pour constituer une base de données d'utilisateurs autorisés dans le système.

Le procédé selon l'invention comporte par ailleurs une phase de test d'authentification.

Cette phase de test d'authentification est désignée par la référence générale 15 sur cette figure 2.

Au cours de cette phase de test d'authentification, un utilisateur candidat, désigné par la référence générale 16 sur cette figure, prononce au moins une fois, la phrase de référence.

Ceci est réalisé par exemple à travers des moyens à microphone, désignés par la référence générale 17 sur cette figure.

Cette phrase prononcée lors de cette phase de test d'authentification 15, est également transformée de la même manière que la phrase de référence prononcée lors de la phase préalable de référencement 10, en utilisant la même transformation, en une suite de symboles qui est alors une suite de symboles candidate.

Sur cette figure 2, la transformation est désignée par la référence générale 18 et met également en œuvre par exemple les modèles de Markov cachés.

La suite de symboles candidate obtenue après transformation, est désignée par la référence générale 19.

La suite de symboles candidate 19 obtenue après transformation de la phrase prononcée par l'utilisateur candidat lors de cette phase d'authentification, est ensuite comparée à la suite de symboles de référence 14.

Cette comparaison est par exemple désignée par la référence générale 20 sur cette figure 2.

On obtient alors un résultat de comparaison entre les suites, désigné par la référence générale 21 sur cette figure 2.

Ce résultat de comparaison 21 est ensuite comparé à au moins un seuil prédéterminé, pour décider si l'utilisateur candidat qui a prononcé la phrase lors de la phase de test 15, est bien un utilisateur autorisé et donc authentifier celui-ci.

Cette comparaison du résultat de comparaison avec au moins un seuil prédéterminé, est désignée par la référence générale 22 sur cette figure 2 et la décision est obtenue en 23.

Le résultat 21 de la comparaison réalisée en 20, est un degré de similarité ou une distance, calculé entre les deux suites de symboles.

Cette distance est la distance de Levenshtein. D'une façon générale, le résultat de comparaison 21 est alors être comparé à des seuils prédéterminés pour détecter des rejeux tels qu'ils ont été décrits précédemment.

En effet, le résultat de comparaison 21 est comparé à des seuils prédéterminés comme par exemple deux, dans le procédé selon l'invention, pour détecter des rejeux par reproduction d'un enregistrement de l'utilisateur autorisé, capté à son insu, lorsque l'utilisateur prononce la phrase de référence ou lors de la transmission ou du traitement de celle-ci, dans le reste du système.

Ce sont les attaques par rejeux non techniques et techniques décrits précédemment.

Comme cela a été indiqué précédemment, lors de la phase préalable de référencement 10 et de la phase de test d'authentification 15, l'utilisateur peut être amené à prononcer au moins une fois une phrase.

En particulier, on peut amener l'utilisateur à répéter la phrase de référence au moins deux fois d'affilée.

Ceci permet alors par exemple en plus, de comparer les suites de symboles successives correspondantes et comparer le résultat de cette comparaison à au moins un seuil prédéterminé pour détecter des problèmes d'environnement sonore notamment lorsque ceux-ci sont bruités.

Bien entendu d'autres modes de réalisation de ce procédé et de ce système peuvent être envisagés.

La vérification du locuteur consiste alors à déterminer si un locuteur est bien celui qu'il prétend être.

Le procédé et le système selon l'invention disposent en entrée d'un échantillon de parole et d'une identité proclamée d'un utilisateur avec une référence.

Une mesure de similarité ou de distance est calculée entre l'échantillon et la référence du locuteur correspondant à l'identité programmée.

Au cours de cette mesure, le système accepte ou rejette le locuteur.

Dans la vérification du locuteur dépendant du texte, le texte prononcé par le locuteur pour être reconnu du système, est le même que celui qu'il a prononcé pour créer sa référence.

Par conséquent, le défi d'un système de vérification du locuteur dépendant du texte, est de modéliser à la fois les caractéristiques du locuteur et le contenu lexical de la phrase prononcée.

Donc un système de vérification du locuteur dépendant du texte devrait être en mesure de rejeter un locuteur ayant prononcé une phrase différente de celle de sa référence.

Dans le procédé et le système selon l'invention, on applique des méthodes de segmentation de données audio avec des modèles statistiques appris d'une manière non supervisée pour la vérification du locuteur dépendant du texte.

Avec ces méthodes, on transforme les données audio en une chaîne de symboles. Ainsi des données audio de référence et de test peuvent être comparées et un degré de similarité ou une distance entre elles peut être mesuré.

Pour mesurer la distance ou la similarité entre deux fichiers audio transformés en séquences de symboles, la distance de Levenshtein est utilisée de préférence.

En établissant un seuil, on peut ainsi accepter ou rejeter le locuteur et détecter que la phrase prononcée est bien la phrase de référence.

Il va de soi bien entendu que d'autres modes de réalisation encore peuvent être envisagés.

## Revendications

1. Procédé d'authentification par biométrie vocale d'un utilisateur, comportant une phase préalable de référencement (10) d'un utilisateur autorisé, au cours de laquelle cet utilisateur prononce au moins une fois, une phrase de référence, **caractérisé en ce que** cette phrase est transformée en une suite de symboles de référence (14) par une transformation statistique (13) commune à tous les utilisateurs à référencer, et une phase de test d'authentification (15), comportant une première étape au cours de laquelle un utilisateur candidat prononce au moins une fois, la phrase de référence et cette phrase prononcée est transformée de la même manière que la phrase de référence lors de la phase préalable, en utilisant la même transformation (18), en une suite de symboles candidate (19), et une deuxième étape au cours de laquelle la suite de symboles candidate (19) est comparée (en 20) à la suite de symboles de référence (14) pour déterminer un résultat de comparaison (21) et ce résultat (21) est comparé (en 22) à au moins un seuil prédéterminé, pour décider (en 23) si l'utilisateur candidat qui a prononcé la phrase lors de la phase de test, est bien un utilisateur autorisé et donc authentifier celui-ci, **en ce que** le résultat de comparaison (21) est une distance calculée entre les deux suites de symboles, la distance calculée (21) étant la distance de Levenshtein, et **en ce que** le résultat de comparaison (21) est comparé à deux seuils prédéterminés, pour détecter des rejeux par reproduction d'un enregistrement de l'utilisateur autorisé capté à son insu, lors de la transmission ou du traitement de la phrase de référence.

2. Procédé d'authentification par biométrie vocale d'un utilisateur, selon la revendication 1, **caractérisé en ce que** la transformation statistique (13, 18) est une transformation dont l'apprentissage est fait de manière non supervisée.

3. Procédé d'authentification par biométrie vocale d'un utilisateur selon la revendication 1 ou 2, **caractérisé en ce que** la transformation statistique (13, 18) utilise des modèles de Markov cachés.

4. Procédé d'authentification par biométrie vocale d'un utilisateur, selon l'une quelconque des revendications précédentes, **caractérisé en ce que** l'utilisateur est amené à répéter la phrase de référence au moins deux fois d'affilée et on compare le résultat de la comparaison des suites de symboles successives correspondantes, à au moins un seuil prédéterminé pour détecter des problèmes d'environnement sonore.

5. Système d'authentification par biométrie vocale d'un utilisateur, pour la mise en œuvre d'un procédé selon l'une quelconque des revendications précédentes, comportant des moyens de référencement préalable d'un utilisateur autorisé, dans lesquels cet utilisateur prononce au moins une fois, une phrase de référence, **caractérisé en ce que** cette phrase est transformée en une suite de symboles de référence par une transformation statistique commune à tous les utilisateurs à référencer, et des moyens de test d'authentification, comportant des premiers moyens dans lesquels un utilisateur candidat prononce au moins une fois, la phrase de référence et cette phrase prononcée est transformée de la même manière que la phrase de référence lors de la phase préalable, en utilisant la même transformation, en une suite de symboles candidate, et des seconds moyens par lesquels la suite de symboles candidate est comparée à la suite de symboles de référence pour déterminer un résultat de comparaison et ce résultat est comparé à au moins un seuil prédéterminé, pour décider si l'utilisateur candidat qui a prononcé la phrase lors de la phase de test, est bien un utilisateur autorisé et donc authentifier celui-ci, le résultat de comparaison (21) étant une distance calculée entre les deux suites de symboles, la distance calculée (21) étant la distance de Levenshtein, le résultat de comparaison (21) étant comparé à deux seuils prédéterminés, pour détecter des rejeux par reproduction d'un enregistrement de l'utilisateur autorisé capté à son insu, lors de la transmission ou du traitement de la phrase de référence.

## Patentansprüche

1. Verfahren zur Authentifizierung eines Benutzers durch Sprachbiometrie, umfassend eine vorherige Phase einer Referenzierung (10) eines autorisierten Benutzers, in deren Verlauf dieser Benutzer mindestens einmal einen Referenzsatz ausspricht, **dadurch gekennzeichnet, dass** dieser Satz durch eine allen zu referenzierenden Benutzern gemeinsame statistische Transformation (13) in eine Folge von Referenzsymbolen (14) umgewandelt wird, und eine Testphase der Authentifizierung (15), umfassend einen ersten Schritt, in dessen Verlauf ein Benutzerkandidat mindestens einmal den Referenzsatz ausspricht und dieser ausgesprochene Satz wird auf die gleiche Weise wie der Referenzsatz in der vorherigen Phase unter Verwendung derselben Transformation (18) in eine Folge von Kandidatensymbolen (19) umgewandelt, und einen zweiten Schritt, in dem die Folge von Kandidatensymbolen (19) mit der Folge von Referenzsymbolen (14) verglichen wird (in 20), um ein Vergleichsresultat (21) zu bestimmen, und dieses Resultat (21) wird mit mindestens einem vorbestimmten Schwellenwert verglichen (in 22), um zu entscheiden (in 23), ob der Benutzerkandidat, der den Satz in der Testphase ausgesprochen hat, ein autorisierter Benutzer ist, und ihn somit zu authentifizieren,
dass das Vergleichsresultat (21) ein berechneter Abstand zwischen den zwei Folgen von Symbolen ist, wobei der berechnete Abstand (21) der Levenshtein-Abstand ist,
und, dass das Vergleichsresultat (21) mit zwei vorbestimmten Schwellenwerten verglichen wird, um bei der Übertragung oder Verarbeitung des Referenzsatzes ein erneutes Abspielen durch Wiedergabe einer ohne Wissen des autorisierten Benutzers aufgenommenen Aufzeichnung des autorisierten Benutzers zu erkennen.

2. Verfahren zur Authentifizierung eines Benutzers durch Sprachbiometrie nach Anspruch 1, **dadurch gekennzeichnet, dass** die statistische Transformation (13, 18) eine Transformation ist, deren Training auf nicht überwachte Weise erfolgt.

3. Verfahren zur Authentifizierung eines Benutzers durch Sprachbiometrie nach Anspruch 1 oder 2, **dadurch gekennzeichnet, dass** die statistische Transformation (13, 18) verborgene Markov-Modelle verwendet.

4. Verfahren zur Authentifizierung eines Benutzers durch Sprachbiometrie nach einem der vorherigen Ansprüche, **dadurch gekennzeichnet, dass** der Benutzer veranlasst wird, den Referenzsatz mindestens zweimal hintereinander zu wiederholen, und das Resultat des Vergleichs der entsprechenden aufeinanderfolgenden Folgen von Symbolen mit mindestens einem vorbestimmten Schwellenwert verglichen wird, um Probleme mit der akustischen Umgebung zu erkennen.

5. System zur Authentifizierung eines Benutzers durch Sprachbiometrie, zur Durchführung eines Verfahrens nach einem der vorherigen Ansprüche, umfassend Mittel zur vorherigen Referenzierung eines autorisierten Benutzers, in denen dieser Benutzer mindestens einmal einen Referenzsatz ausspricht, **dadurch gekennzeichnet, dass** dieser Satz durch eine allen zu referenzierenden Benutzern gemeinsame statistische Transformation in eine Folge von Referenzsymbolen umgewandelt wird, und Testmittel der Authentifizierung, umfassend erste Mittel, in denen ein Benutzerkandidat mindestens einmal den Referenzsatz ausspricht und dieser ausgesprochene Satz wird auf die gleiche Weise wie der Referenzsatz in der vorherigen Phase unter Verwendung derselben Transformation in eine Folge von Kandidatensymbolen umgewandelt, und zweite Mittel, durch die die Folge von Kandidatensymbolen mit der Folge von Referenzsymbolen verglichen wird, um ein Vergleichsresultat zu bestimmen, und dieses Resultat wird mit mindestens einem vorbestimmten Schwellenwert verglichen, um zu entscheiden, ob der Benutzerkandidat, der den Satz in der Testphase ausgesprochen hat, ein autorisierter Benutzer ist, und ihn somit zu authentifizieren,
dass das Vergleichsresultat (21) ein berechneter Abstand zwischen den zwei Folgen von Symbolen ist, wobei der berechnete Abstand (21) der Levenshtein-Abstand ist,
wobei das Vergleichsresultat (21) mit zwei vorbestimmten Schwellenwerten verglichen wird, um bei der Übertragung oder Verarbeitung des Referenzsatzes ein erneutes Abspielen durch Wiedergabe einer ohne Wissen des autorisierten Benutzers aufgenommenen Aufzeichnung des autorisierten Benutzers zu erkennen.

## Claims

1. A method for user authentication by voice biometrics, comprising a prior phase for referencing (10) an authorized user, during which this user pronounces a reference phrase at least once,
**characterized in that** this phrase is converted into a series of reference symbols (14) by a statistical conversion (13) mutual to all of the users to be referenced, and an authentication test phase (15), including a first step during which a candidate user pronounces the reference phrase at least once, and this pronounced phrase is converted in the same manner as the reference phrase during the prior phase, by using the same conversion (18), into a series of candidate symbols (19), and a second step during which the series of candidate symbols (19) is compared (in 20) to the series of reference symbols (14) to determine a comparison result (21) and this result (21) is compared (in 22) to at least one predetermined threshold, to decide (in 23) whether the candidate user who pronounced the phrase during the test phase is indeed the authorized user, and therefore to authenticate him,
**in that** the comparison result (21) is a calculated distance between the two series of symbols, the calculated distance (21) being the Levenshtein distance,
and **in that** the comparison result (21) is compared to two predetermined thresholds, to detect replays by a reproduction of a recording of the authorized user captured without his consciousness, during the transmission or during the processing of the reference phrase.

2. The method for user authentication by voice biometrics according to claim 1, **characterized in that** the statistical conversion (13, 18) is a conversion for which the learning is done in an unsupervised manner.

3. The method for user authentication by voice biometrics according to claim 1 or 2, **characterized in that** the statistical conversion (13, 18) uses hidden Markov models.

4. The method for user authentication by voice biometrics according to any one of the preceding claims, **characterized in that** the user is asked to repeat the reference phrase at least twice in a row and the result of the comparison of the corresponding successive series of symbols is compared to at least one predetermined threshold to detect audio environment problems.

5. A system for user authentication by voice biometrics, for carrying out a method according to any one of the preceding claims, comprising means for prior referencing of an authorized user, in which this user pronounces a reference phrase at least once, **characterized in that** this phrase is converted into a series of reference symbols by a statistical conversion mutual to all of the users to be referenced, and authentication test means, including first means in which a candidate user pronounces the reference phrase at least once, and this pronounced phrase is converted in the same manner as the reference phrase during the prior phase, by using the same conversion, into a series of candidate symbols, and second means in which the series of candidate symbols is compared to the series of reference symbols to determine a comparison result and this result is compared to at least one predetermined threshold, to decide whether the candidate user who pronounced the phrase during the test phase is indeed the authorized user, and therefore to authenticate him,
the comparison result (21) being a calculated distance between the two series of symbols, the calculated distance (21) being the Levenshtein distance,
the comparison result (21) being compared to two predetermined thresholds, to detect replays by a reproduction of a recording of the authorized user captured without his consciousness, during the transmission or during the processing of the reference phrase.
